# EUROPÄISCHE PATENTSCHRIFT

(11) **EP 0 778 401 B1**
(45) Veröffentlichungstag und Bekanntmachung des Hinweises auf die Patenterteilung: **12.09.2001**
(21) Anmeldenummer: 96118221.9
(22) Anmeldetag: 13.11.1996
(51) Int. Cl.: F01N 7/00, F01N 3/08

(54) **Verfahren zur Funktionsüberwachung eines Kohlenwasserstoffadsorbers**
Method for monitoring the operation of a hydrocarbon adsorber
Procédé de surveillance de fonctionnement d'un adsorbeur d'hydrocarbures

(30) Priorität: 04.12.1995 DE 19545169
(43) Veröffentlichungstag der Anmeldung: 11.06.1997
(73) Patentinhaber: Bayerische Motoren Werke Aktiengesellschaft, 80788 München (DE)
(72) Erfinder: Klauer, Norbert, 85778 Haimhausen (DE); Schleich, Manfred, 82110 Germering (DE); Kiefer, Wolf, 82256 Fürstenfeldbruck (DE)
(74) Vertreter: Bücken, Helmut

(56) Entgegenhaltungen:
- EP-A- 0 588 123
- US-A- 5 524 433
- PATENT ABSTRACTS OF JAPAN Vol. 018, Nr. 360 (M-1634) 07 Juli 1994 & JP 06 093 829 A (NISSAN MOTOR CO LTD) 05 April 1994
- PATENT ABSTRACTS OF JAPAN vol. 9, no. 1996, 30.September 1996 & JP 08 121232 A (NISSAN MOTOR CO LTD)
- PATENT ABSTRACTS OF JAPAN vol. 018, no. 310 (M-1620), 14.Juni 1994 & JP 06 066131 A (NISSAN MOTOR CO LTD), 8.März 1994
- PATENT ABSTRACTS OF JAPAN vol. 096, no. 002, 29.Februar 1996 & JP 07 259539 A (HONDA MOTOR CO LTD), 9.Oktober 1995

## Beschreibung

Die Erfindung betrifft ein Verfahren zur Funktionsüberwachung eines HC-Adsorbers im Abgasstrang einer Brennkraftmaschine. Zum Stand der Technik wird beispielshalber auf die DE 42 40 012 A1 verwiesen. Wie dem Fachmann bekannt ist, geht die neuere Entwicklung im Rahmen der Abgasreinigung von Brennkraftmaschinen dahin, zusätzlich zu den bekannten Abgaskatalysatoren sowie stromauf derselben einen Adsorber für die im Abgas befindlichen Kohlenwasserstoffe vorzusehen. Anschließend an einen Kaltstart der Brennkraftmaschine, d. h. wenn der Abgaskatalysator noch nicht seine Betriebstemperatur erreicht hat, können in diesem Adsorber kurzzeitig die Kohlenwasserstoffe des Abgases zwischengespeichert werden. Zu einem späteren Zeitpunkt, wenn der Abgaskatalysator in der Lage ist, die schädlichen Abgasbestandteile erfolgreich zu konvertieren, werden aufgrund der dann höheren Temperaturen vom Adsorber die zunächst gespeicherten HC-Anteile wieder abgegeben. Wie dem Fachmann weiterhin bekannt ist, bestehen gesetzliche Vorschriften zur Funktionsüberwachung der im Abgasstrang eines von einer Brennkraftmaschine angetriebenen Kraftfahrzeuges vorgesehenen Abgasnachbehandlungsvorrichtungen. Diese Funktionsüberwachung ist allgemein unter dem Begriff der sog. "Onboard-Diagnose" bekannt.

Nach der JP-A-06 066 131 wird die Funktionsföhigkeit eines HC-Adsorbers in Abgasstrang eines Automobils überwacht mit zwei Sprung-Lambda-Sonden stromauf bzw stromab des HC-Absorbers.

Es ist Aufgabe der vorliegenden Erfindung ein onderes Funktionsüberwachungsverfahren aufzuzeigen.Diese Aufgabe wird durch die Merkmale Vorteilhafte Weiterbildungen sind Inhalt des Unteranspruchs des Patentanspruchs 1 gelöst.

Erfindungsgemäß wird vorgeschlagen, die Signale zumindest zweier Sprung-Lambda-Sonden, die stromauf sowie stromab des Adsorbers vorgesehen sind, auszuwerten. Diese dem Fachmann bekannten Sprung-Lambda-Sonden geben in der direkten Umgebung des Lambda-Wertes 1,0 ein Sprungsignal ab, d. h. bei Überschreiten des Lambda-Wertes 1,0 entweder von oben oder von unten her ändert sich schlagartig die Ausgangsspannung dieser Sprung-Lambda-Sonden. Erfindungsgemäß wird nun durch Änderung der Abgaszusammensetzung ein Sprungsignal der Lambda-Sonden hervorgerufen und die Zeitspanne zwischen dem Sprungsignal der stromaufwärtigen Sonde und dem Sprungsignal der stromabwärtigen Sonde ermittelt. Ist diese Zeitspanne geringer als eine vorgegebene Mindest-Zeitspanne, so wird abermals ein Hinweissignal für eine mangelhafte Funktion des HC-Adsorbers ausgegeben.

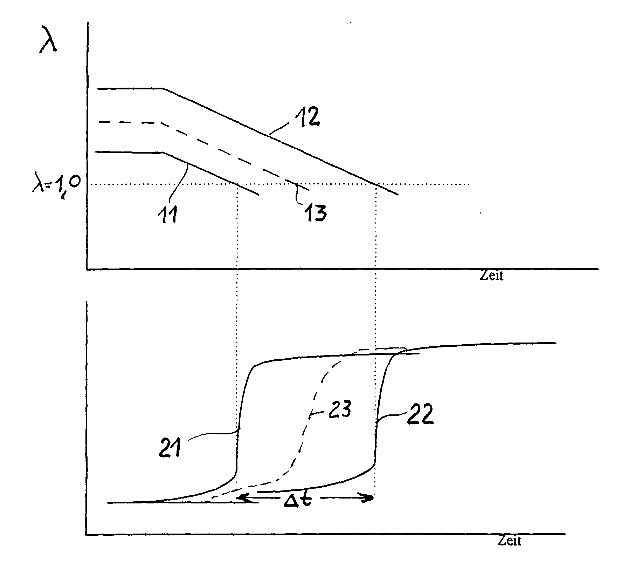

Zur näheren Erläuterung der Ausführungsform der Erfindung wird auch auf die beigefügte Figur verwiesen, wobei im oberen Diagramm über der Zeit die Abgaszusammensetzung bzw. die jeweiligen der Abgaszusammensetzung entsprechenden Lambda-Werte aufgetragen sind, während im unteren Diagramm über der gleichen Zeitachse die Ausgangssignale der Sprung-Lambda-Sonden vor und nach Adsorber aufgetragen sind. Im oberen Diagramm ist der sich durch die Änderung der Abgaszusammensetzung einstellende Verlauf des Lambda-Wertes stromauf des Adsorbers mit der Bezugsziffer 11 und derjenige stromab des Adsorbers mit der Bezugsziffer 12 bezeichnet, in entsprechender Weise ist das Sprungsignal der Lambda-Sonde stromauf des Adsorbers im unteren Diagramm mit der Bezugsziffer 21 und dasjenige der Lambda-Sonde stromab des Adsorbers mit der Bezugsziffer 22 bezeichnet.

Wie soeben erläutert, wird die Abgaszusammensetzung während der Adsorptionsphase, d. h. solange der HC-Adsorber in der Lage ist, Kohlenwasserstoffe zu speichern, derart geändert, daß sich der im oberen Diagramm dargestellte Verlauf 11 des Lamda-Wertes einstellt. Da der Adsorber Kohlenwasserstoffe speichert, erkennt die Sprung-Lambda-Sonde stromab des Adsorbers stets einen höheren Lambda-Wert als diejenige stromauf des Adsorbers. Unterschreitet nun - ausgehend von einem Lambda-Wert > 1,0 im Zeitverlauf der Lambda-Wert 11 stromauf des Adsorbers den Wert λ = 1,0, so gibt die Sprung-Lambda-Sonde stromauf des Adsorbers gleichzeitig das Sprungsignal 21 ab. Zu einem späteren Zeitpunkt unterschreitet auch der Lambda-Wert 12 stromab des Adsorbers den Wert 1,0, wobei die Sprung-Lambda-Sonde stromab des Adsorbers das Sprungsignal 22 abgibt. Erfindungsgemäß wird nun die Zeitspanne Δt zwischen diesen beiden Sprungsignalen 22 und 21 ermittelt. Nur dann, wenn diese Zeitspanne Δ t größer ist als eine sog. Mindest-Zeitspanne, ist der HC-Adsorber ausreichend aktiv, d. h. in der Lage, eine ausreichende Menge von Kohlenwasserstoffen zu adsorbieren.

In den beiden Diagrammen eingetragen sind ferner zwei weitere Kurven 13, 23, die sich für die stromab des Adsorbers vorgesehene Sprung-Lambda-Sonde bei einem nicht ausreichend funktionstüchtigen Adsorber einstellen würden. Ein derartiger nicht ausreichend funktionstüchtiger HC-Adsorber könnte nämlich lediglich eine geringere Menge von Kohlenwasserstoffen speichern, wodurch sich stromab des Adsorbers ein betragsmäßig niedrigerer Lambda-Wert einstellen würde. Entsprechend dem gestrichelt dargestellten Lambda-Wert-Verlauf 13 würde dann der Wert λ = 1,0 stromab des Adsorbers zu einem früheren Zeitpunkt erreicht, so daß auch binnen einer kürzeren Zeitspanne das gestrichelt dargestellte Sprungsignal 23 von der stromab des Adsorbers vorgesehenen Sprung-Lambda-Sonde abgegeben werden würde. In diesem Falle wäre die sog. Mindest-Zeitspanne zwischen dem Sprungsignal 21 sowie dem Sprungsignal 23 noch nicht erreicht, so daß als Folge davon dann das bereits mehrfach erläuterte Hinweissignal auf die mangelnde Funktionstüchtigkeit des HC-Adsorbers ausgegeben wird.

Die in diesem Zusammenhang zu initiierende Änderung der Abgaszusammensetzung kann auf verschiedene Weise erfolgen. Beispielsweise könnte die Zusammensetzung des der Brennkraftmaschine zugeführten Gemisches entsprechend geändert werden. Bevorzugt jedoch erfolgt diese Änderung der Abgaszusammensetzung durch eine Änderung der in den Abgasstrom der Brennkraftmaschine eingeblasenen Zusatzluft-Menge. Hierbei muß auf die Laufruhe bzw. aktuelle Betriebsweise der Brennkraftmaschine keine Rücksicht genommen werden, vielmehr erfolgt die Änderung der Abgas-Zusammensetzung erst im Abgasstrom der Brennkraftmaschine. Eine dementsprechende Abgas-Zusammensetzungs-Änderung ist besonders vorteilhaft, wenn ohnehin im Rahmen der Abgasnachbehandlungsmaßnahmen eine sog. Sekundärluftpumpe, die dem Abgasstrom der Brennkraftmaschine Zusatzluft beimengt, vorhanden ist. Diese Sekundärluftpumpe kann nun in ihrer Fördermenge regelbar sein, so daß gezielt Lambda-Wert-Verläufe über der Zeit entsprechend der Kurve 11 im oberen Diagramm eingestellt werden können. Bei der entsprechenden Ansteuerung der sog. Sekundärluftpumpe, die die gewünschte Zusatzluft-Menge in die Abgasanlage der Brennkraftmaschine einbläst und somit Zusatzluft dem Abgasstrom der Brennkraftmaschine beimengt, können verschiedene Korrekturgrößen berücksichtigt werden. Neben dem aktuellen von der Brennkraftmaschine verarbeiteten Luftmassenstrom ist hierbei insbesondere die aktuelle Spannung der die Sekundärluftpumpe versorgenden Batterie zu nennen. Schließlich kann auch eine Adaption der beim letzten Kaltstart der Brennkraftmaschine ermittelten erforderlichen Sekundärluftmenge - auch im Hinblick auf das jeweilige Kraftstoffverhältnis - erfolgen.

Insgesamt wurde somit eine Möglichkeit zur Überprüfung der Speicherfähigkeit bzw. Funktion eines HC-Adsorbers im Abgasstrang einer Brennkraftmaschine vorgestellt, die mit einfachen Mitteln realisierbar ist.

## Patentansprüche

1. Verfahren zur Funktionsüberwachung eines HC-Adsorbers im Abgasstrang einer Brennkraftmaschine,
**dadurch gekennzeichnet, daß** die Ausgangssignale zweier Sprung-Lambda-Sonden, die stromauf sowie stromab des Adsorbers vorgesehen sind, ausgewertet werden, wobei eine ein Sprungsignal der Lambda-Sonden hervorrufende Änderung der Abgaszusammensetzung initiiert wird, wobei die Zeitspanne (Δt) zwischen dem Sprungsignal (21) der stromaufwärtigen Sonde und dem Sprungsignal (22) der stromabwärtigen Sonde ermittelt wird, und wobei im Falle, daß die ermittelte Zeitspanne (Δt) kleiner ist als eine Mindest-Zeitspanne, ein Hinweissignal ausgegeben wird.

2. Verfahren nach Anspruch 1,
**dadurch gekennzeichnet, daß** die Änderung der Abgaszusammensetzung durch eine Änderung der in den Abgasstrom der Brennkraftmaschine eingeblasenen Zusatzluft-Menge vorgenommen wird.

## Claims

1. A method of monitoring the operation of a hydrocarbon adsorber in the exhaust-gas system of an internal combustion engine, **characterised in that** the output signals from two jump lambda probes disposed upstream and downstream of the adsorber are evaluated, wherein a change in the exhaust-gas composition causing a jump signal from the lambda probe is initiated, wherein the time interval (Δt) between the jump signal (21) from the upstream probe and the jump signal (22) from the downstream probe is determined and wherein an indication signal is issued if the measured time interval (Δt) is less than a minimum time interval.

2. A method according to claim 1, **characterised in that** the change in the exhaust-gas composition is brought about by a change in the amount of additional air blown into the exhaust-gas flow from the engine.

## Revendications

1. Procédé de surveillance de fonctionnement d'un adsorbeur d'hydrocarbures dans la ligne d'échappement d'un moteur à combustion interne,
**caractérisé en ce qu'**
on valorise les signaux sortant de deux sondes lambda à saut montées respectivement en amont et en aval de l'adsorbeur et on crée une modification de la composition des gaz d'échappement provoquant un signal à saut des sondes lambda, puis on détermine l'intervalle de temps (Δt) entre le signal à saut (21) de la sonde amont et le signal (22) de la sonde aval et, dans le cas où cet intervalle de temps (Δt) est inférieur à une durée minimale, un signal indicateur est émis.

2. Procédé selon la revendication 1,
**caractérisé en ce que**
la modification de la composition des gaz d'échappement est obtenue en faisant varier le débit d'air additionnel insufflé dans le courant des gaz d'échappement sortant du moteur.
